# EUROPÄISCHE PATENTSCHRIFT

(11) **EP 4 150 201 B1**
(45) Veröffentlichungstag und Bekanntmachung des Hinweises auf die Patenterteilung: **29.01.2025**
(21) Anmeldenummer: 21720717.4
(22) Anmeldetag: 19.04.2021
(51) Int. Cl.: F02M 21/02, F16K 43/00

(54) **GASDOSIERVENTIL FÜR BRENNKRAFTMASCHINEN**
GAS DOSING VALVE FOR INTERNAL COMBUSTION ENGINE
VANNE DE DOSAGE DE GAZ POUR MOTEUR À COMBUSTION INTERNE

(30) Priorität: 14.05.2020 DE 102020206111; 11.11.2020 DE 102020214170
(43) Veröffentlichungstag der Anmeldung: 22.03.2023
(73) Patentinhaber: Robert Bosch GmbH, 70442 Stuttgart (DE)
(72) Erfinder: TUERKER, Oezguer, 70839 Gerlingen (DE); BEIER, Marco, 07407 Rudolstadt (DE); SUENDERHAUF, Gerhard, 75233 Tiefenbronn (DE); FISCHER, Fabian, 71334 Waiblingen (DE); BUROCK, Torsten, 71665 Vaihingen An Der Enz (DE); BOSSE, Daniel, 71706 Markgroeningen (DE)
(86) Internationale Anmeldenummer: PCT/EP2021/060072
(87) Internationale Veröffentlichungsnummer: WO 2021/228496

(56) Entgegenhaltungen:
- EP-A2- 1 336 738
- EP-B1- 1 336 738
- DE-A1- 102014 224 341
- US-A1- 2004 238 030

## Beschreibung

Die Erfindung betrifft ein Gasdosierventil, wie es vorzugsweise Verwendung findet, um gasförmigen Kraftstoff direkt in einen Brennraum oder einen Ansaugtrakt einer Brennkraftmaschine einzudosieren.

### Stand der Technik

Gasventile zur dosierten Zumessungen von Gasen sind aus dem Stand der Technik zum Beispiel aus der DE 10 2014 225 922 A1 bekannt. Das hier offenbarte Gasventil umfasst ein bewegliches Ventilelement, das gegen die Kraft eines Federelements durch einen Elektromagneten bewegbar ist und dadurch eine Verbindung zwischen einer Einlassöffnung des Gasdosierventils und einer Auslassöffnung öffnet und schließt. Durch An- und Abschalten des Elektromagneten kann das zu dosierende Gas zum gewünschten Zeitpunkt und in der benötigten Menge dosiert werden. Der Dichtsitz des Gasventils befindet sich nahe der Auslassöffnung, was zum einen einen relativ kompakten Aufbau ermöglicht und zum anderen eine präzise Steuerung der Gasmenge erleichtert.

Bei der Zumessung von gasförmigem Kraftstoff direkt in einen Brennraum einer Brennkraftmaschine muss das Gasdosierventil nahe dem Brennraum angeordnet werden. Durch die hohen Verbrennungstemperaturen kommt es so zu einer starken Erwärmung des Gasdosierventils. Soll beispielsweise Wasserstoff eindosiert werden, so kann eine zuverlässige Abdichtung durch einen metallischen Dichtsitz nur schwer erreicht werden, zumal eine solche Abdichtung über die gesamte Lebensdauer des Gasdosierventils aus Sicherheitsgründen unabdingbar ist, auch dann, wenn die Brennkraftmaschine längere Zeit ungenutzt ist. Deshalb ist die Verwendung einer Kunststoff- oder Elastomerdichtung notwendig, die jedoch keinen hohen Temperaturen ausgesetzt werden kann, ohne beschädigt zu werden. Um die Temperaturen am Dichtsitz zu begrenzen, kann das Gasdosierventil so konstruiert werden, dass der mit dem Elastomer beschichtete Dichtsitz relativ weit von der Auslassöffnung und damit vom Brennraum angeordnet ist. Dies führt jedoch zu einer höheren Anfälligkeit des Gasdosierventils gegenüber einem Rückschlagen der Flammen aus dem Brennraum in das Gasdosierventil, da wegen des brennraumfernen Dichtsitzes ein relativ großes Volumen des Gasdosierventils direkt mit dem Brennraum verbunden bleibt, auch dann, wenn das Gasdosierventil geschlossen ist. Insbesondere dann, wenn sich Reste des brennbaren Gases im Gasdosierventil befinden, kann sich die Flammenfront des Brennraums in das Gasdosierventil ausbreiten und dort trotzdem zu einer starken thermischen Belastung am Dichtsitz führen. Darüber hinaus erschwert ein weit von der Auslassöffnung des Gasdosierventils befindlicher Dichtsitz eine exakte Dosierung des gasförmigen Kraftstoffs wegen des relativ großen Volumens zwischen Dichtsitz und Auslassöffnung.

Ein weiteres Gasdosierventil ist aus EP 1 336 738 A2 bekannt. 1f

Vorteile der Erfindung

Die Erfindung wird durch das Gasdosierventil in Anspruch 1 und durch das Verfahren zum Betrieb des Gasdosierventils in Anspruch 8 definiert. 1f

Das erfindungsgemäße Gasdosierventil weist demgegenüber den Vorteil auf, dass eine zuverlässige Dosierung des gasförmigen Kraftstoffs möglich ist, ohne dass die Dichtheit des Gasdosierventils auch bei längerer Standzeit beeinträchtigt ist. Dazu weist das Gasdosierventil ein Gehäuse auf, in dem eine Einlassöffnung und eine Auslassöffnung für den gasförmigen Kraftstoff ausgebildet sind. Im Gehäuse ist ein Gasraum ausgebildet, der die Einlassöffnung mit der Auslassöffnung verbindet, so dass eine Gasströmung von der Einlassöffnung zur Auslassöffnung möglich ist. Im Gasraum ist ein elektrisch betriebenes Sperrventil zur Unterbrechung der Gasströmung im Gasraum angeordnet. Zwischen dem Sperrventil und der Auslassöffnung ist ein elektrisch betriebenes Steuerventil angeordnet, mit dem zusätzlich die Gasströmung zwischen dem Sperrventil und der Auslassöffnung unterbrochen werden kann.

Das Gasdosierventil umfasst also zwei elektrisch steuerbare Ventile, mit denen der Gasstrom innerhalb des Gehäuses unterbrochen werden kann. Nach Beendigung der Gasdosierung kann damit insbesondere das Steuerventil, also das der beiden Ventile, das sich näher an der Auslassöffnung und damit näher am Brennraum befindet, geschlossen werden, um das Eindringen von Wärme zu verhindern. Die thermische Belastung des Sperrventils wird damit deutlich verringert, so dass am Sperrventil eine Elastomerdichtung problemlos eingesetzt werden kann, was die gewünschte Dichtheit auch bei längerer Standzeit der Brennkraftmaschine und damit des Gasdosierventils gewährleistet.

In einer vorteilhaften Ausgestaltung umfasst das Sperrventil ein Sperrventilelement, das mit einem entsprechenden Sperrventilsitz zum Unterbrechen der Gasströmung innerhalb des Gasraums zusammenwirkt. Auch das Steuerventil umfasst in vorteilhafter Weise ein bewegliches Steuerventilelement, das mit einem Steuerventilsitz zum Unterbrechen des Gasstroms zusammenwirkt, wobei beide Ventile vorzugsweise als elektromagnetische Ventile ausgebildet sind.

Der Sperrventilsitz und/oder das Sperrventilelement ist vorzugsweise mit einem Kunststoff, vorzugsweise einem Elastomer, beschichtet um eine gasdichte Abdichtung zu erreichen, auch bei der Dosierung von Wasserstoffgas, das durch eine reine Metall-Metall-Dichtung praktisch nicht vollständig abgedichtet werden kann. Eine vollständige Abdichtung ist jedoch nicht zwischen jeder Eindüsung von gasförmigem Kraftstoff nötig. Folgt in zeitlich geringem Abstand eine weitere Eindüsung, so kann eine gewisse Undichtheit toleriert werden, da die so ausströmende geringe Menge an gasförmigem Kraftstoff mit der nächsten Eindüsung in den Brennraum gedrückt wird und die Funktion der Brennkraftmaschine dadurch nicht beeinträchtigt wird. Deshalb ist eine Elastomerbeschichtung des Steuerventils nicht notwendig, vielmehr kann hier eine robuste und harte Materialpaarung zwischen dem Steuerventilelement und dem Steuerventilsitz gewählt werden, um den Verschleiß in diesem Bereich so gering wie möglich zu halten.

Da beide Ventile vorzugsweise durch einen eigenen Elektromagneten unabhängig voneinander geschaltet werden können, können beliebige Verfahren zum Betreiben des Gasdosierventils umgesetzt werden. Dabei wird vorzugsweise vor Beginn der Dosierung das Absperrventil geöffnet, während das Steuerventil erst mit einem zeitlichen Versatz öffnet. Auch die Metall-Metall-Dichtung des Steuerventils ist für eine kurzzeitige Unterbrechung der Gasströmung ausreichend dicht, so dass die genaue und zeitlich präzise Eindosierung des gasförmigen Kraftstoffs auch ausschließlich über das Steuerventil erfolgen kann, während das Sperrventil ständig offen gehalten wird. Erst bei längerer Standzeit, also wenn für längere Zeit kein gasförmiger Kraftstoff dosiert werden soll, wird auch das Sperrventil geschlossen, um das Gasdosierventil vollkommen abzudichten.

### Zeichnung

In der Zeichnung sind zwei Ausführungsbeispiele des erfindungsgemäßen Gasdosierventils dargestellt. Es zeigt
- Fig. 1: ein erfindungsgemäßes Gasdosierventil im Längsschnitt, wobei nur die wesentlichen Bereiche dargestellt sind, und
- Fig. 2: ein weiteres Ausführungsbeispiel in der gleichen Darstellung wie Fig. 1.

### Beschreibung der Ausführungsbeispiele

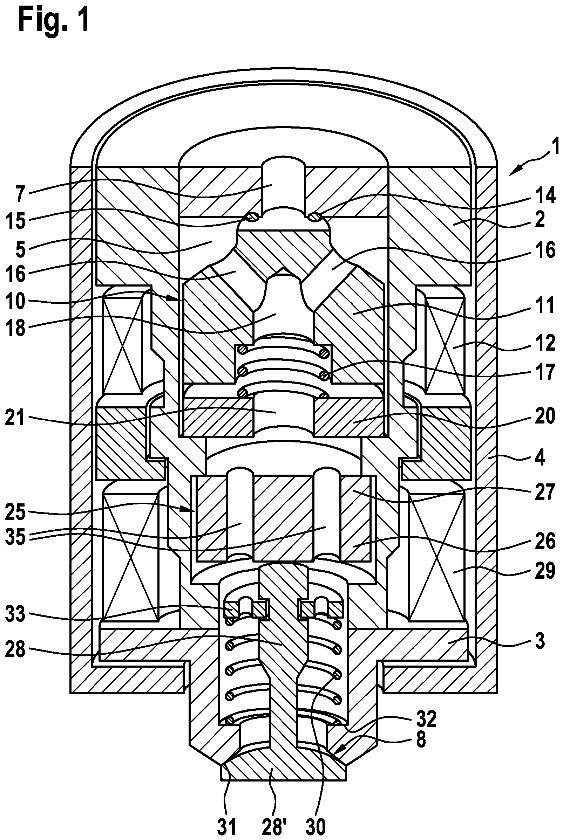

In **Fig. 1** ist ein erstes erfindungsgemäßes Gasdosierventil im Längsschnitt dargestellt, wobei nur die wesentlichen Teile des Gasdosierventils gezeigt sind. Insbesondere die Anschlussleitungen für die Zuführung des gasförmigen Kraftstoffs und die elektrischen Anschlüsse sind nicht dargestellt. Das Gasdosierventil umfasst ein Gehäuse 1, das einen Ventilkörper 2 und einen Düsenkörper 3 umfasst, die durch eine Spannmutter 4 gegeneinander gasdicht verspannt sind. Im Gehäuse 1 ist ein Gasraum 5 ausgebildet, der eine Einlassöffnung 7 und eine Auslassöffnung 8 aufweist und so eine Gasströmung von der Einlassöffnung 7 zur Auslassöffnung 8 ermöglicht. Im Gasraum 5 ist ein Sperrventil 10 angeordnet, das als elektromagnetisches Ventil ausgebildet ist und ein Sperrventilelement 11 umfasst, das mittels eines ersten Elektromagneten 12 gegen die Kraft einer Schließfeder 17 bewegbar ist. Das Sperrventil 10 ist dazu ausgebildet, den Gasstrom innerhalb des Gasraums 5 zu unterbrechen, wenn das Sperrventilelement 11 an einem Sperrventilsitz 14 anliegt. Der Sperrventilsitz 14 ist dazu an dem in der Zeichnung oberen Ende des Gasraums 5 ausgebildet und umgibt die Einlassöffnung 7, durch die der gasförmige Kraftstoff in den Gasraum 5 strömt. Liegt das Sperrventilelement 11 am Sperrventilsitz 14 an, so wird die Einlassöffnung 7 gegen den Gasraum 5 verschlossen, so dass keine Gasströmung von der Einlassöffnung 7 in den Gasraum 5 erfolgen kann. Durch Bestromen des Elektromagneten 12 kann das Sperrventilelement 11 vom Sperrventilsitz 14 weggezogen werden, so dass zwischen dem Sperrventilelement 11 und dem Gehäuse 2 ein Strömungsquerschnitt freigegeben wird, durch den das Gas aus der Einlassöffnung in den Gasraum 5 strömt. Dabei ist der weitere Strömungsweg durch zwei oder mehrere Verbindungsbohrungen 16 gegeben, die im Sperrventilelement 11 ausgebildet sind und die in eine Längsbohrung 18 münden, die mittig im Sperrventilelement 11 verläuft, wobei auch die Schließfeder 17 in dieser Längsbohrung 18 angeordnet ist.

Der Elektromagnet 12 umgibt den Ventilkörper 2 an seiner Außenseite, wobei der Ventilkörper 2 oder Teile davon als Magnetkern wirken, um das Magnetfeld gezielt im Bereich des Sperrventilelements 11 zu konzentrieren und damit ein schnelles Schalten zu ermöglichen. Der Hubanschlag für das Sperrventilelement 11 wird durch eine Zwischenscheibe 20 gebildet, die eine zentrale Öffnung 21 aufweist, durch die das Gas weiter innerhalb des Gasraums 5 strömen kann. Dabei liegt die Zwischenscheibe 20 an einem Absatz innerhalb des Gasraums 5 und wird durch die Vorspannkraft der Schließfeder 17 dort ortsfest gehalten.

Am Sperrventilelement 11 ist im Bereich der Dichtfläche, die mit dem Sperrventilsitz 14 zusammenwirkt, eine Elastomerdichtung 15 angeordnet, die aus einem flexiblen Kunststoff besteht und sich damit elastisch an die Dichtflächen anpasst. Diese Elastomerdichtung 15 sorgt für eine gasdichte Abdichtung am Sperrventilsitz 14 auch dann, wenn das Gasdosierventil längere Zeit nicht verwendet wird und das Gas ständig unter dem vorgesehenen Eindüsdruck an der Einlassöffnung anliegt.

Stromabwärts des Sperrventils 10 und der Zwischenscheibe 20 ist im Gasraum 5 ein Steuerventil 25 angeordnet, das ebenso wie das Sperrventil 10 die Gasströmung innerhalb des Gasraums 5 zur Auslassöffnung 8 hin unterbrechen kann. Das Steuerventil 25 umfasst ein Steuerventilelement 26, das einen Magnetanker 27 und ein Schließelement 28 umfasst, die miteinander verbunden sind und sich damit stets zusammen bewegen. Der Magnetanker 27 ist im Wesentlichen zylinderförmig ausgebildet und weist zwei oder mehr Längsbohrungen 35 auf, durch die der gasförmige Kraftstoff in Richtung der Auslassöffnung 8 strömen kann, wobei sich die Auslassöffnung am Ende des Ventilkörpers 2 befindet, der das brennraumseitige Ende des Gehäuses 1 bildet. Das Schließelement 28 ist kolbenförmig ausgebildet und weist an seinem brennraumseitigen, das heißt in der Zeichnung unteren Ende, einen Schließteller 28' auf, an der eine Dichtfläche ausgebildet ist, mit der der Schließteller mit einem Steuerventilsitz 31 zusammenwirkt, der an der Außenseite des Düsenkörpers 3 die Auslassöffnung 8 umgebend ausgebildet ist. Das Schließelement 28 ist von einer Feder 30 umgeben, die unter Druckvorspannung zwischen einem Absatz 32 im Düsenkörper 3 und einer Stützscheibe 33 angeordnet ist, wobei die Stützscheibe 33 fest mit dem Schließelement 28 verbunden ist. Durch die Vorspannkraft der Feder 30 wird das Steuerventilelement 26 gegen den Steuerventilsitz 31 gedrückt und verschließt so die Auslassöffnung 8.

Zum Öffnen des Steuerventils 25 wird der Elektromagnet 29 bestromt, der das Steuerventilelement 26 gegen die Kraft der Feder 30 vom Steuerventilsitz 31 in Richtung des Brennraums zieht, also aus dem Gasraum 5 heraus. Dadurch wird zwischen dem Schließteller 28' und dem Steuerventilsitz 31 ein Strömungsquerschnitt aufgesteuert, durch den der gasförmige Kraftstoff ausströmt. Nach Beendigung der Bestromung des Elektromagneten 29 drückt die Feder 30 das Steuerventilelement 26 zurück in seine Schließstellung.

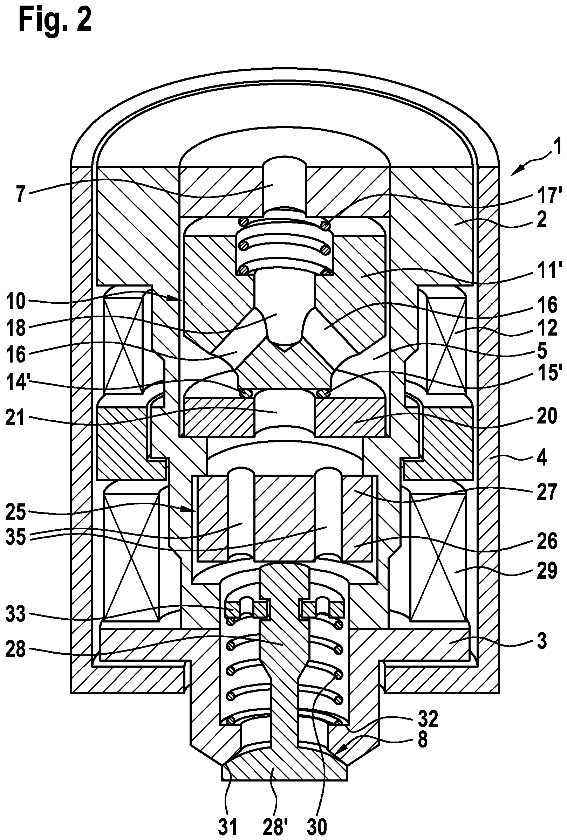

Ein weiteres Ausführungsbeispiel ist in **Fig. 2** dargestellt, das in derselben Darstellung wie **Fig. 1** ein Gasdosierventil zeigt, bei dem das Sperrventilelement 11' gegenüber dem ersten Ausführungsbeispiel der Fig. 1 um 180° gedreht angeordnet ist. Entsprechend ist die Schließfeder 17' hier zwischen der Einlassöffnung 7 und dem Sperrventilelement 11' unter Vorspannung angeordnet und drückt das Sperrventilelement 11' gegen den Sperrventilsitz 14', der an der zentralen Öffnung 21 der Zwischenscheibe 20 ausgebildet ist. Auch bei diesem Ausführungsbeispiel ist eine Elastomerdichtung 15' vorhanden, damit das Sperrventilelement 11' die zentrale Öffnung 21 gasdicht verschließt.

Das Sperrventilelement 11' öffnet beim Ausführungsbeispiel nach **Fig. 2** durch die Wirkung des Elektromagneten 12 gegen die Fließrichtung des gasförmigen Kraftstoffs. Kommt es zu einem Überdruckfall, bei dem zwischen der Einlassöffnung 7 und der Auslassöffnung 8 eine unzulässig hohe Druckdifferenz des gasförmigen Kraftstoffs auftritt, so unterstützt der Gasfluss die Kraft der Schließfeder 17' und drückt das Sperrventilelement 11' in seine Schließstellung. Dies verhindert eine unkontrollierte Abgabe von gasförmigem Kraftstoff in das zu versorgende System, beispielsweise einen Brennraum einer Brennkraftmaschine.

Beide Elektromagneten 12, 29 lassen sich unabhängig voneinander ansteuern, so dass das Sperrventil 10 und das Steuerventil 25 unabhängig voneinander geöffnet und geschlossen werden können. Für die eigentliche Eindosierung des gasförmigen Kraftstoffs in den Brennraum ist das Steuerventil 25 ausreichend, da zwischen zeitlich eng aufeinanderfolgenden Eindüsungen in der Regel kein vollständig dichter Verschluss notwendig ist. Das Gasdosierventil kann also in der Weise betrieben werden, dass zu Beginn der Eindosierung das Sperrventil 10 geöffnet wird und erst anschließend das Steuerventil 25, das durch seinen Öffnungszeitpunkt und seine Öffnungsdauer die Menge des gasförmigen Kraftstoffs bestimmt. Soll zeitnah eine weitere Abgabe von gasförmigem Kraftstoff erfolgen, so kann auch nur das Steuerventil 25 geschlossen und wieder geöffnet werden, während das Sperrventil 10 ständig geöffnet bleibt. Erst bei einer längeren Dosierpause wird auch das Sperrventil 10 geschlossen, um die notwendige absolute Dichtheit zu erreichen. Das Sperrventil 10 muss deshalb keine hohe Dynamik aufweisen, das heißt, es kann hier ein relativ einfaches elektromagnetisches Ventil verwendet werden, das nur einen kleinen Elektromagneten umfasst und deshalb mit wenig Energie auskommt. Da das Steuerventil 25 keine hohen Abdichtungsanforderungen erfüllen muss, können hier harte und verschleißarme Materialien im Bereich des Steuerventilsitzes verwendet werden, die hohen Belastungen standhalten und die eine hohe Lebensdauer aufweisen.

## Patentansprüche

1. Gasdosierventil für gasförmigen Kraftstoff, mit einem Gehäuse (1), in dem eine Einlassöffnung (7) und eine Auslassöffnung (8) für den gasförmigen Kraftstoff ausgebildet sind, und mit einem Gasraum (5), der im Gehäuse (1) ausgebildet ist und der die Einlassöffnung (7) mit der Auslassöffnung (8) verbindet, so dass eine Gasströmung von der Einlassöffnung (7) zur Auslassöffnung (8) möglich ist, und mit einem Sperrventil (10) zur Unterbrechung der Gasströmung im Gasraum (5), wobei im Gasraum (5) zwischen dem Sperrventil (10) und der Auslassöffnung (8) ein elektrisch betriebenes Steuerventil (25) angeordnet ist, mit dem die Gasströmung zwischen dem Sperrventil (10) und der Auslassöffnung (8) unterbrochen werden kann,
wobei das Sperrventil (10) mittels einem elektrischen Aktor (12) steuerbar ist, wobei es sich bei dem elektrischen Aktor (12) um einen ersten Elektromagneten (12) handelt, wobei
das Sperrventil (10) als elektromagnetisches Steuerventil ausgebildet ist und das Sperrventil (10) mittels des ersten Elektromagneten (12) betätigt wird,
**dadurch gekennzeichnet, dass** das Steuerventil (25) als elektromagnetisches Steuerventil ausgebildet ist und dass
das Steuerventil (25) mittels eines zweiten Elektromagneten (28) betätigt wird, wobei beide Elektromagnete unabhängig voneinander ansteuerbar sind.

2. Gasdosierventil nach Anspruch 1, **dadurch gekennzeichnet, dass** das Sperrventil (10) ein bewegliches Sperrventilelement (11; 11') umfasst, das mit einem Sperrventilsitz (14) zum Unterbrechen der Gasströmung im Gasraum (5) zusammenwirkt.

3. Gasdosierventil nach Anspruch 2, **dadurch gekennzeichnet, dass** das Sperrventilelement (11; 11') von einer Schließfeder (17; 17') in Richtung des Sperrventilsitzes (14; 14') mit einer Schließkraft beaufschlagt ist, so dass das Sperrventil (10) bei Aktivierung des elektrischen Aktors (12) gegen die Kraft der Schließfeder bewegt wird.

4. Gasdosierventil nach Anspruch 2, **dadurch gekennzeichnet, dass** das Sperrventil (10) in Strömungsrichtung des gasförmigen Kraftstoffs öffnet.

5. Gasdosierventil nach Anspruch 2, **dadurch gekennzeichnet, dass** das Sperrventil (10) gegen die Strömungsrichtung des gasförmigen Kraftstoffs öffnet.

6. Gasdosierventil nach einem der Ansprüche 2 bis 5, **dadurch gekennzeichnet, dass** das Sperrventilelement (11; 11') zumindest in dem Bereich, der mit dem Sperrventilsitz (14; 14') zusammenwirkt, und/oder der Steuerventilsitz (14; 14') mit einem Kunststoff, insbesondere mit einem Elastomer, beschichtet ist.

7. Gasdosierventil nach einem der Ansprüche 1 bis 6, **dadurch gekennzeichnet, dass** das Steuerventil (25) ein bewegliches Steuerventilelement (26) umfasst, das mit einem Steuerventilsitz (30) zum Unterbrechen der Gasströmung im Gasraum (5) zusammenwirkt.

8. Verfahren zum Betreiben eines Gasdosierventils nach einem der Ansprüche 1 bis 7, **dadurch gekennzeichnet, dass** zur Dosierung des gasförmigen Kraftstoffs zuerst das Sperrventil (10) geöffnet wird und zeitlich nachfolgend das Steuerventil (25).

9. Verfahren nach Anspruch 8, **dadurch gekennzeichnet, dass** das Sperrventil (10) während des Betriebs des Gasdosierventils geöffnet bleibt und die Eindosierung des gasförmigen Kraftstoffs ausschließlich durch das Steuerventil (25) geschieht.

## Claims

1. Gas metering valve for gaseous fuel, having a housing (1), in which an inlet opening (7) and an outlet opening (8) for the gaseous fuel are formed, and having a gas chamber (5) which is formed in the housing (1) and which connects the inlet opening (7) to the outlet opening (8) so that a gas flow from the inlet opening (7) to the outlet opening (8) is possible, and having a shut-off valve (10) for interrupting the gas flow in the gas chamber (5), wherein an electrically operated control valve (25), with which the gas flow between the shut-off valve (10) and the outlet opening (8) can be interrupted, is arranged between the shut-off valve (10) and the outlet opening (8) in the gas chamber (5),
wherein the shut-off valve (10) can be controlled by means of an electrical actuator (12), wherein the electrical actuator (12) is a first electromagnet (12), wherein the shut-off valve (10) is in the form of an electromagnetic control valve and the shut-off valve (10) is actuated by means of the first electromagnet (12),
**characterized in that** the control valve (25) is in the form of an electromagnetic control valve, and **in that** the control valve (25) is actuated by means of a second electromagnet (28),
wherein the two electromagnets can be driven independently of each other.

2. Gas metering valve according to Claim 1, **characterized in that** the shut-off valve (10) comprises a movable shut-off valve element (11; 11'), which interacts with a shut-off valve seat (14) for interrupting the gas flow in the gas chamber (5).

3. Gas metering valve according to Claim 2, **characterized in that** the shut-off valve element (11; 11') is subjected to a closing force in the direction of the shut-off valve seat (14; 14') by a closing spring (17; 17'), so that the shut-off valve (10) is moved against the force of the closing spring when the electrical actuator (12) is activated.

4. Gas metering valve according to Claim 2, **characterized in that** the shut-off valve (10) opens in the direction of flow of the gaseous fuel.

5. Gas metering valve according to Claim 2, **characterized in that** the shut-off valve (10) opens against the direction of flow of the gaseous fuel.

6. Gas metering valve according to any of Claims 2 to 5, **characterized in that** the shut-off valve element (11; 11'), at least in the region which interacts with the shut-off valve seat (14; 14'), and/or the control valve seat (14; 14') are/is coated with a plastic, in particular with an elastomer.

7. Gas metering valve according to any of Claims 1 to 6, **characterized in that** the control valve (25) comprises a movable control valve element (26), which interacts with a control valve seat (30) for interrupting the gas flow in the gas chamber (5).

8. Method for operating a gas metering valve according to any of Claims 1 to 7, **characterized in that**, for the purpose of metering the gaseous fuel, the shut-off valve (10) is opened first and the control valve (25) is opened subsequently.

9. Method according to Claim 8, **characterized in that** the shut-off valve (10) remains open during operation of the gas metering valve and the gaseous fuel is metered in exclusively by the control valve (25).

## Revendications

1. Vanne de dosage de gaz pour combustible gazeux, avec un boîtier (1) dans lequel sont formés un orifice d'entrée (7) et un orifice de sortie (8) pour le combustible gazeux, et avec une chambre (5) pour le gaz, qui est formée dans le boîtier (1) et qui relie l'orifice d'entrée (7) à l'orifice de sortie (8), de sorte qu'un écoulement de gaz soit possible de l'orifice d'entrée (7) à l'orifice de sortie (8), et avec une vanne d'arrêt (10) pour interrompre le flux de gaz dans la chambre (5) pour le gaz, une vanne de commande (25) à actionnement électrique étant agencée dans la chambre (5) pour le gaz entre la vanne d'arrêt (10) et l'ouverture de sortie (8), au moyen de laquelle le flux de gaz est apte à être interrompu entre la vanne d'arrêt (10) et l'ouverture de sortie (8),
la vanne d'arrêt (10) étant apte à être commandée au moyen d'un actionneur électrique (12), l'actionneur électrique (12) étant un premier électroaimant (12), la vanne d'arrêt (10) étant conçue sous la forme d'une vanne de commande électromagnétique et la vanne d'arrêt (10) étant actionnée au moyen du premier électroaimant (12),
**caractérisée en ce que** la vanne de commande (25) est conçue sous la forme d'une vanne de commande électromagnétique et **en ce que** la vanne de commande (25) est actionnée au moyen d'un deuxième électroaimant (28),
les deux électroaimants étant aptes à être commandés indépendamment l'un de l'autre.

2. Vanne de dosage de gaz selon la revendication 1, **caractérisée en ce que** la vanne d'arrêt (10) comprend un élément mobile (11 ; 11') de vanne d'arrêt, qui coopère avec un siège (14) de vanne d'arrêt pour interrompre le flux de gaz dans la chambre (5) pour le gaz.

3. Vanne de dosage de gaz selon la revendication 2, **caractérisée en ce que** l'élément (11 ; 11') de vanne d'arrêt est sollicité par un ressort de fermeture (17 ; 17') en direction du siège (14 ; 14') de vanne d'arrêt avec une force de fermeture, de sorte que la vanne d'arrêt (10) soit déplacée à l'encontre de la force du ressort de fermeture lors de l'activation de l'actionneur électrique (12).

4. Vanne de dosage de gaz selon la revendication 2, **caractérisée en ce que** la vanne d'arrêt (10) s'ouvre dans le sens d'écoulement du combustible gazeux.

5. Vanne de dosage de gaz selon la revendication 2, **caractérisée en ce que** la vanne d'arrêt (10) s'ouvre dans le sens inverse de l'écoulement du combustible gazeux.

6. Vanne de dosage de gaz selon l'une des revendications 2 à 5, **caractérisée en ce que** l'élément (11 ; 11') de vanne d'arrêt est revêtu d'une matière plastique, notamment d'un élastomère, au moins dans la zone qui coopère avec le siège (14 ; 14') de vanne d'arrêt et/ou le siège (14 ; 14') de vanne de commande.

7. Vanne de dosage de gaz selon l'une des revendications 1 à 6, **caractérisée en ce que** la vanne de commande (25) comprend un élément (26) de vanne de commande mobile coopérant avec un siège (30) de vanne de commande de façon à interrompre l'écoulement de gaz dans la chambre (5) pour le gaz.

8. Procédé de fonctionnement d'une vanne de dosage de gaz selon l'une des revendications 1 à 7, **caractérisé en ce que**, pour doser le combustible gazeux, la vanne d'arrêt (10) est d'abord ouverte puis, chronologiquement, la vanne de commande (25).

9. Procédé selon la revendication 8, **caractérisé en ce que** la vanne d'arrêt (10) reste ouverte pendant le fonctionnement de la vanne de dosage de gaz et **en ce que** le dosage du combustible gazeux est effectué exclusivement par la vanne de commande (25).
